# EUROPÄISCHE PATENTSCHRIFT

(11) **EP 3 207 232 B1**
(45) Veröffentlichungstag und Bekanntmachung des Hinweises auf die Patenterteilung: **21.03.2018**
(21) Anmeldenummer: 15770525.2
(22) Anmeldetag: 28.09.2015
(51) Int. Cl.: F02B 63/04, B60K 6/24, F02B 67/06, F01B 1/10, F02B 75/22, F02B 75/18

(54) **STROMAGGREGAT**
POWER UNIT
GROUPE ÉLECTROGÈNE

(30) Priorität: 16.10.2014 DE 102014115044
(43) Veröffentlichungstag der Anmeldung: 23.08.2017
(73) Patentinhaber: Obrist Technologies GmbH, 6890 Lustenau (AT)
(72) Erfinder: LAIMBOECK, Franz, A-8051 Thal (AT); OBRIST, Frank, A-6900 Bregenz (AT)
(74) Vertreter: Kilchert, Jochen
(86) Internationale Anmeldenummer: PCT/EP2015/072198
(87) Internationale Veröffentlichungsnummer: WO 2016/058811

(56) Entgegenhaltungen:
- WO-A1-2012/056275
- WO-A1-2012/163902
- GB-A- 463 278
- JP-A- H09 324 649
- US-A1- 2009 107 426

## Beschreibung

Die Erfindung bezieht sich auf ein Stromaggregat mit den Merkmalen des Oberbegriffs des Anspruchs 1. Ferner betrifft die Erfindung ein Fahrzeug mit einem derartigen Stromaggregat. Ein Stromaggregat der eingangs genannten Art ist beispielsweise aus WO 2012/056275 A1 oder aus GB 463 278 A bekannt. Das bekannte Stromaggregat weist einen Zweizylinder-Hubkolbenmotor mit gegenläufigen Kurbelwellen auf, die durch Stirnräder an ihren Wellenzapfen miteinander gekoppelt sind. Die Stirnräder stehen miteinander in Eingriff und synchronisieren die gegenläufigen Kurbelwellen. Der Hubkolbenmotor treibt einen Generator an, der zur Stromerzeugung dient. Der Generator weist ein Generatorzahnrad auf, das mit einer der beiden Kurbelwellen kämmt. Dabei rotiert der Generator im Betrieb gegenläufig zu einer ersten Kurbelwelle und gleichläufig zu einer zweiten Kurbelwelle.
Das bekannte Stromaggregat kommt insbesondere in einem Hybridfahrzeug zum Einsatz, weshalb es auf eine hohe Laufruhe, Vibrationsarmut und einen kompakten Aufbau ankommt. Diese Eigenschaften erfüllt das bekannte Stromaggregat bereits. Dennoch bestehen Bestrebungen, diese Eigenschaften weiter zu verbessern.
Die Erfindung stellt sich daher die Aufgabe, das bekannte Stromaggregat so weiterzubilden, dass es verbesserte Eigenschaften hinsichtlich der Laufruhe und der Vibrationsarmut, insbesondere bei kompakten Abmessungen, aufweist. Ferner besteht die Aufgabe der Erfindung darin, ein Fahrzeug mit einem solchen Stromaggregat vorzuschlagen.
Erfindungsgemäß wird diese Aufgabe im Hinblick auf das Stromaggregat durch den Gegenstand des Patentanspruchs 1 und im Hinblick auf das Fahrzeug durch den Gegenstand des Patentanspruchs 6 gelöst.

So beruht die Erfindung auf dem Gedanken, ein Stromaggregat, insbesondere für ein Hybridfahrzeug, mit einem Zweizylinder-Hubkolbenmotor vorzuschlagen, der zwei Kolben aufweist, die in zwei Zylindern in Tandemanordnung geführt sind. Der Zweizylinder-Hubkolbenmotor weist außerdem zwei gegenläufige Kurbelwellen auf, die mit den Kolben durch Pleuel verbunden sind. Das Stromaggregat umfasst einen Generator, der zur ersten Kurbelwelle gegenläufig und zur zweiten Kurbelwelle gleichläufig drehbar ist. Erfindungsgemäß ist der Generator über ein Zugmittel mit wenigstens der ersten Kurbelwelle antriebsverbunden und weist eine Ausgleichsmasse auf. Die erste Kurbelwelle ist ferner über eine Steuerkette oder einen Steuerriemen mit einer Ausgleichswelle verbunden, die eine weitere Ausgleichsmasse trägt.
Indem der Generator eine Ausgleichsmasse trägt, wirkt der Generator bereits als erste Ausgleichswelle. Der Generator erfüllt somit eine Doppelfunktion, nämlich die Stromerzeugung einerseits und den Ausgleich von Massenkräften anderseits. Folglich trägt der so gestaltete Generator zur Verbesserung der Laufruhe bei. Für den vollständigen Ausgleich der Massenkräfte zweiter Ordnung ist daher lediglich eine einzige separate Ausgleichswelle erforderlich. Damit ist trotz eines vollständigen Lanchester-Ausgleichs ein kompakter Aufbau eines Stromaggregats realisiert, das signifikante Verbesserungen hinsichtlich der Laufruhe und Vibrationsarmut aufweist. Die erfindungsgemäße Verwendung einer Zahnkette ermöglicht eine geräuschmindernde Bauweise, wobei zusätzlich eine hohe Verschleißbeständigkeit besteht. Außerdem hat die Zahnkette Vorteile hinsichtlich der Ölschmierung des Hubkolbenmotors. Das Zugmittel ist eine beidseitig verzahnte Zahnkette, wobei eine Außenseite der Zahnkette mit einem Kettenrad der ersten Kurbelwelle und eine Innenseite der Zahnkette mit einem Kettenrad der zweiten Kurbelwelle in Eingriff stehen. Die Zahnkette folgt insoweit einem relativ einfachen Verlauf, was hinsichtlich der Kraftübertragung von den Kettenrädern zum Generator vorteilhaft ist. Insbesondere weist die Zahnkette eine geringe Anzahl von Umlenkstellen unter Last auf. Überdies wird ein direkter Zahnradeingriff der Kurbelwellen untereinander bzw. mit dem Generator vermieden, was der Laufruhe des Hubkolbenmotors zugute kommt.
Bei dem erfindungsgemäßen Stromaggregat kann in weiteren bevorzugten Varianten vorgesehen sein, dass die erste Kurbelwelle oder die Ausgleichswelle eine Schwungmasse trägt. Die Schwungmasse dient dem Ausgleich der Wechseldrehmomente. Vorzugsweise ist die Schwungmasse auf der ersten Kurbelwelle, also der zum Generator gegenläufigen Kurbelwelle, angeordnet. Alternativ kann die Schwungmasse auf der Ausgleichswelle angeordnet sein, was je nach Einbaulage des Stromaggregats in einem Fahrzeug vorteilhaft sein kann, um in der Kurbelwellenebene eine möglichst geringe Breite des Stromaggregats bereitzustellen. Ferner kann vorgesehen sein, dass sowohl die erste Kurbelwelle, als auch die Ausgleichswelle jeweils eine Teil-Schwungmasse tragen.
Zum Ausgleich der Massenkräfte zweiter Ordnung ist es zweckmäßig, wenn das Übersetzungsverhältnis von den Kurbelwellen zum Generator und/oder zur Ausgleichswelle 2:1 beträgt. Da der Generator mit der Ausgleichsmasse ebenfalls als Ausgleichswelle wirkt, sollte auch hier das für den Lanchester-Ausgleich, also den Ausgleich der freien Massenkräften zweiter Ordnung, zweckmäßige Übersetzungsverhältnis von 2:1 eingehalten werden. Damit wird bewirkt, dass die Ausgleichswelle bzw. der Generator gegenüber den Kurbelwellen jeweils mit doppelter Drehzahl rotieren.
Die erste Kurbelwelle kann außerdem ein Steuerzahnrad aufweisen, das über die Steuerkette oder den Steuerriemen mit einem Zwischenrad eines Steuertriebs gekoppelt ist. Das Zwischenrad weist einen Durchmesser auf, der dem doppelten des Durchmessers des Steuerzahnrads entspricht. Mit anderen Worten ist vorgesehen, dass die Steuerkette bzw. der Steuerriemen das Steuerzahnrad der ersten Kurbelwelle sowohl mit der Ausgleichswelle, als auch mit dem Zwischenrad kuppelt. Das Zwischenrad kann stirnseitig auf dem Steuertrieb angeordnet sein.

Durch die doppelte Größe des Zwischenrads gegenüber dem Steuerzahnrad wird erreicht, dass zwischen den Kurbelwellen und dem Steuertrieb ein Übersetzungsverhältnis von 1:2 besteht. Der Steuertrieb dreht also halb so schnell wie die Kurbelwellen. Dabei kann der Steuertrieb ein tiefliegender Steuertrieb sein, der unterhalb der Zylinderdichtebene des Hubkolbenmotors angeordnet ist.

Bei dem erfindungsgemäßen Stromaggregat ist in einer vorteilhaften Ausführungsform ein einziger Generator vorgesehen. Die Beschränkung auf einen einzigen Generator kommt nicht nur der Kompaktheit des Stromaggregats zugute, sondern senkt auch die Produktionskosten. Insgesamt ist so ein besonders effizientes, geräuscharmes und laufruhiges Stromaggregat geschaffen, das kostengünstig produzierbar ist. Gleichzeitig verbessert die geringe Anzahl von Gesamtbauteilen die Wartungsfreundlichkeit des Stromaggregats.

Gemäß einem nebengeordneten Aspekt wird ein Fahrzeug, insbesondere ein Hybridfahrzeug, mit einem zuvor genannten Stromaggregat offenbart und beansprucht.

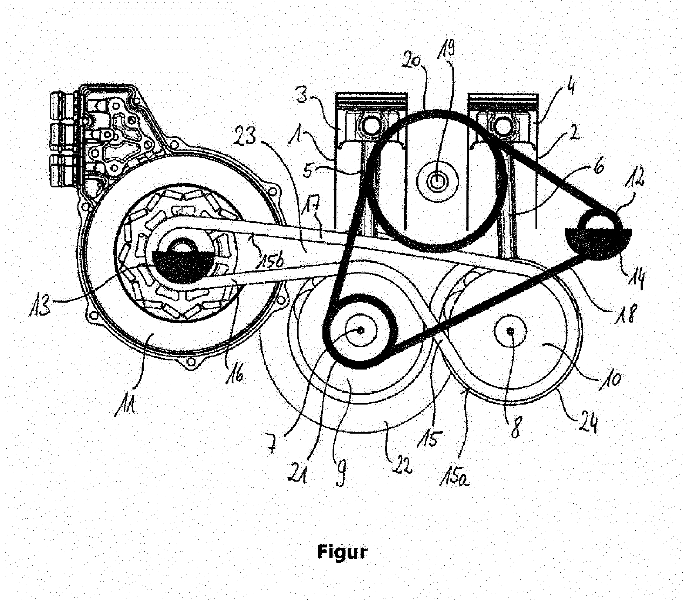

Die Erfindung wird im Folgenden anhand eines Ausführungsbeispiels unter Bezugnahme auf die beigefügte Figur näher erläutert. Darin zeigt die einzige Figur eine schematische Seitenansicht eines erfindungsgemäßen Stromaggregats, wobei für die Erfindung unwesentliche Bauteile ausgeblendet sind.

Das in der Figur gezeigte Stromaggregat umfasst einen Hubkolbenmotor mit zwei Zylindern 1, 2 (Zweizylinder-Hubkolbenmotor), in welchem Kolben 3, 4 geführt sind. Die Kolben 3, 4 sind mittels Pleuel 5, 6 mit Kurbelwellen 7, 8 verbunden. Dabei ist jeder Kolben 3, 4 jeweils einer Kurbelwelle 7, 8 zugeordnet. Der Hubkolbenmotor weist folglich zwei Kurbelwellen 7, 8 auf, die parallel nebeneinander angeordnet sind. Die Kurbelwellen 7, 8 drehen gegenläufig. Insofern ist der Zweizylinder-Hubkolbenmotor in Tandembauweise ausgeführt.

Die Kurbelwellen 7, 8 tragen stirnseitig Kettenräder 9, 10. Die Kettenräder 9, 10 sind beabstandet zueinander angeordnet und durch eine Zahnkette 15 miteinander gekoppelt. Die Zahnkette 15 ist beidseitig verzahnt, wobei eine Außenseite 15a der Zahnkette 15 mit dem Kettenrad 9 der ersten Kurbelwelle 7 in Eingriff steht. Eine Innenseite 15b der Zahnkette 15 steht in Eingriff mit dem Kettenrad 10 der zweiten Kurbelwelle 8. Ferner verläuft die Zahnkette 15 zu einem Generator 11, wobei die Innenseite 15b der Zahnkette 15 in ein Zahnrad des Generators 11 eingreift. Der Generator 11 ist insofern mittels der Zahnkette 15 mit den Kurbelwellen 7, 8 gekoppelt und wird von den Kurbelwellen 7, 8 angetrieben. Dabei dreht der Generator 11 zur ersten Kurbelwelle 7 gegenläufig und zur zweiten Kurbelwelle 8 gleichläufig.

Die Zahnkette 15 verläuft zwischen den Kettenrädern 9, 10 abschnittsweise geradlinig, wobei der gerade Abschnitt der Zahnkette 15 zwischen den Kettenrädern 9, 10 vorzugsweise wenigstens 30 mm beträgt, um einen genauen Eingriff der einzelnen Zähne der Zahnkette 15 in die Kettenräder 9, 10 zu gewährleisten.

Wie in der Figur gut erkennbar ist, verläuft ein Zugtrum 16 der Zahnkette 15 zwischen dem Generator 11 und der ersten Kurbelwelle 7 bzw. dem Kettenrad 9 der ersten Kurbelwelle 7. Zwischen der zweiten Kurbelwelle 8 bzw. dem Kettenrad 10 der zweiten Kurbelwelle 8 und dem Generator 11 verläuft ein Lostrum 17 der Zahnkette 15. Da die Distanz zwischen dem Kettenrad 10 der zweiten Kurbelwelle 8 und dem Generator 11 vergleichsweise groß ist, ist zweckmäßigerweise vorgesehen, zwischen dem Generator 11 und der zweiten Kurbelwelle 8 eine Kettenführung 23 vorzusehen. Die Kettenführung 23 verhindert im Wesentlichen ein Durchhängen des Lostrums 17 und trägt insoweit zur Laufruhe des Stromaggregats bei.

Auf einem Wellenzapfen der ersten Kurbelwelle 7 ist ein Steuerzahnrad 21 angeordnet. Das Steuerzahnrad 21 kann mit dem Kettenrad 10 der ersten Kurbelwelle 7 fest verbunden sein. Jedenfalls ist vorgesehen, dass zwischen dem Steuerzahnrad 21 und dem Kettenrad 10 der ersten Kurbelwelle 7 eine drehfeste Verbindung besteht. Das Steuerzahnrad 21 greift in eine Steuerkette 18 ein, die das Steuerzahnrad 21 mit einer Ausgleichswelle 12 und einem Steuertrieb 19 koppelt. Insbesondere verläuft die Steuerkette 18 von dem Steuerzahnrad 21 zur Ausgleichswelle 12 und weiter zu einem Zwischenrad 20, das stirnseitig auf dem Steuertrieb 19 sitzt. Das Zwischenrad 20 ist vorzugsweise doppelt so groß wie das Steuerzahnrad 21 ausgebildet, so dass ein Übersetzungsverhältnis von 2:1 zwischen dem Steuertrieb 19 und den Kurbelwellen 7, 8 eingestellt ist. Der Steuertrieb 19 kann vorteilhafterweise als tiefliegender Steuertrieb ausgebildet sein. Konkret ist der Steuertrieb 19 bevorzugt unterhalb der Zylinderdichtebene angeordnet. Dies reduziert die Bauhöhe des Stromaggregats.

Zum Ausgleich der Massenkräfte zweiter Ordnung, d.h. zum sogenannten Lanchester-Ausgleich, sind Ausgleichsmassen 13, 14 vorgesehen. Dabei ist eine Ausgleichsmasse 13 am Generator 11 angeordnet. Gleichphasig aber gegenläufig hierzu ist eine weitere Ausgleichsmasse 14 an der Ausgleichswelle 12 angeordnet. Zwischen der Ausgleichswelle 12 bzw. dem Generator 11 und den Kurbelwellen 7, 8 besteht jeweils ein Übersetzungsverhältnis von 1:2. Mit anderen Worten rotieren sowohl der Generator 11, als auch die Ausgleichswelle 12 doppelt so schnell wie die Kurbelwellen 7, 8. Dabei erfolgt die Rotation der Ausgleichswelle 12 und des Generators 11 jeweils gegenläufig zueinander, um einen effizienten Ausgleich der Massenkräfte zweiter Ordnung zu gewährleisten.

Für den Ausgleich der Wechseldrehmomente, die durch die Zündfolge des Hubkolbenmotors im 4-Takt-Betrieb auftreten, ist eine Schwungmasse 22 vorgesehen, die mit der ersten Kurbelwelle 7 verbunden ist. Die Schwungmasse 22 ist vorzugsweise auf einer rückwärtigen Seite des Hubkolbenmotors angeordnet. Mit anderen Worten weist die erste Kurbelwelle 7 an ihren Längsenden jeweils einen Wellenzapfen auf, wobei an einem ersten, vorderen Wellenzapfen das Kettenrad 9 und das Steuerzahnrad 21 angeordnet ist. An einem gegenüberliegenden, zweiten Wellenzapfen ist die Schwungmasse 22 drehfest fixiert. Eine weitere Schwungmasse 24 kann mit der zweiten Kurbelwelle 8 verbunden sein. Die weitere Schwungmasse 24, die der zweiten Kurbelwelle 8 zugeordnet ist, ist vorzugsweise kleiner als die Schwungmasse 22 der ersten Kurbelwelle 7.

### Bezugszeichenliste

- 1, 2: Zylinder
- 3, 4: Kolben
- 5, 6: Pleuel
- 7: erste Kurbelwelle
- 8: zweite Kurbelwelle
- 9, 10: Kettenräder
- 11: Generator
- 12: Ausgleichswelle
- 13, 14: Ausgleichsmassen
- 15: Zahnkette
- 15a: Außenseite
- 15b: Innenseite
- 16: Zugtrum
- 17: Lostrum
- 18: Steuerkette
- 19: Steuertrieb
- 20: Zwischenrad
- 21: Steuerzahnrad
- 22, 24: Schwungmassen
- 23: Kettenführung

## Patentansprüche

1. Stromaggregat, insbesondere für ein Hybridfahrzeug, mit einem Zweizylinder-Hubkolbenmotor, der zwei Kolben (3, 4), die in zwei Zylindern (1, 2) in Tandem-Anordnung geführt sind, und zwei gegenläufige Kurbelwellen (7, 8) aufweist, die mit den Kolben (3, 4) durch Pleuel (5, 6) verbunden sind, und mit einem Generator (11), der zur ersten Kurbelwelle (7) gegenläufig und zur zweiten Kurbelwelle (8) gleichläufig drehbar ist,
**dadurch gekennzeichnet, dass**
der Generator (11) über ein Zugmittel mit wenigstens der ersten Kurbelwelle (7) antriebsverbunden ist und eine Ausgleichsmasse (13) aufweist, wobei die erste Kurbelwelle (7) über eine Steuerkette (18) oder einen Steuerriemen mit einer Ausgleichswelle (12) verbunden ist, die eine weitere Ausgleichsmasse (14) trägt, wobei das Zugmittel eine beidseitig verzahnte Zahnkette (15) ist, und wobei eine Außenseite (15a) der Zahnkette (15) mit einem Kettenrad (9) der ersten Kurbelwelle (7) und eine Innenseite (15b) mit einem Kettenrad (10) der zweiten Kurbelwelle (8) im Eingriff steht.

2. Stromaggregat nach einem der vorhergehenden Ansprüche,
**dadurch gekennzeichnet, dass**
die erste Kurbelwelle (7) oder die Ausgleichswelle (12) eine Schwungmasse (22) trägt.

3. Stromaggregat nach einem der vorhergehenden Ansprüche,
**dadurch gekennzeichnet, dass**
ein Übersetzungsverhältnis von den Kurbelwellen (7, 8) zum Generator (11) und/oder zur Ausgleichswelle (12) 2:1 beträgt.

4. Stromaggregat nach einem der vorhergehenden Ansprüche,
**dadurch gekennzeichnet, dass**
die erste Kurbelwelle (7) ein Steuerzahnrad (21) aufweist, das über die Steuerkette (18) oder den Steuerriemen mit einem Zwischenrad (20) eines Steuertriebs (19) gekoppelt ist, dessen Durchmesser dem Doppelten des Durchmessers des Steuerzahnrads (21) entspricht.

5. Stromaggregat nach einem der vorhergehenden Ansprüche,
**dadurch gekennzeichnet, dass**
ein einziger Generator (11) vorgesehen ist.

6. Fahrzeug, insbesondere Hybridfahrzeug, mit einem Stromaggregat nach einem der vorhergehenden Ansprüche.

## Claims

1. Power unit, in particular for a hybrid vehicle, having a two-cylinder reciprocating engine, which has two pistons (3, 4) that are guided in two cylinders (1, 2) in a tandem arrangement, and two counter-rotating crankshafts (7, 8), which are connected to the pistons (3, 4) by means of connecting rods (5, 6), and having an generator (11), which is rotatable in a counter-rotating manner to the first crankshaft (7) and synchronously with the second crankshaft (8),
**characterized in that**
the generator (11) is drive-connected to at least the first crankshaft (7) via a traction means and has a compensation mass (13), wherein the first crankshaft (7) is connected via a timing chain (18) or a timing belt to a compensation shaft (12), which has a further compensation mass (14), wherein the traction means is a toothed chain (15) with gear teeth on both sides, and wherein an outer side (15a) of the toothed chain (15) is in engagement with a chain wheel (9) of the first crankshaft (7) and an inner side (15b) is in engagement with a chain wheel (10) of the second crankshaft (8).

2. Power unit according to any one of the preceding claims,
**characterized in that**
the first crankshaft (7) or the compensation shaft (12) carries a flywheel mass (22).

3. Power unit according to any one of the preceding claims,
**characterized in that**
a transmission ratio of the crankshafts (7, 8) to the generator (11) and/or to the compensation shaft (12) is 2:1.

4. Power unit according to any one of the preceding claims,
**characterized in that**
the first crankshaft (7) has a timing gear wheel (21), which is coupled via the timing chain (18) or the timing belt to an idler wheel (20) of a timing drive (19), the diameter of which being equal to twice the diameter of the timing gear wheel (21).

5. Power unit according to any one of the preceding claims,
**characterized in that**
a single generator (11) is provided.

6. Vehicle, in particular hybrid vehicle, having a power unit according to any one of the preceding claims.

## Revendications

1. Groupe électrogène, en particulier pour un véhicule hybride, avec un moteur alternatif bicylindre qui présente deux pistons (3, 4) guidés dans deux cylindres (1, 2) selon un agencement en tandem et deux vilebrequins contrarotatifs (7, 8), lesquels sont reliés aux pistons (3, 4) par des bielles (5, 6), et avec un générateur (11) qui peut tourner dans le sens contraire au premier vilebrequin (7) et dans le même sens que le deuxième vilebrequin (8),
**caractérisé en ce**
**que** le générateur (11) est relié en entraînement au moins au premier vilebrequin (7) via un moyen de traction et présente une masse d'équilibrage (13), dans lequel le premier vilebrequin (7) est relié via une chaîne de distribution (18) ou une courroie de distribution à un arbre d'équilibrage (12) qui porte une autre masse d'équilibrage (14), dans lequel le moyen de traction est une chaîne à dents (15) dentée des deux côtés, et dans lequel un côté extérieur (15a) de la chaîne à dents (15) est en prise avec une roue dentée à chaîne (9) du premier vilebrequin (7) et un côté intérieur (15b) est en prise avec une roue dentée à chaîne (10) du deuxième vilebrequin (8).

2. Groupe électrogène selon l'une des revendications précédentes,
**caractérisé en ce**
**que** le premier vilebrequin (7) ou l'arbre d'équilibrage (12) porte une masse d'équilibrage (22).

3. Groupe électrogène selon l'une des revendications précédentes,
**caractérisé en ce**
**qu'**un rapport de transmission des vilebrequins (7, 8) au générateur (11) et/ou à l'arbre d'équilibrage (12) est de 2:1.

4. Groupe électrogène selon l'une des revendications précédentes,
**caractérisé en ce**
**que** le premier vilebrequin (7) présente une roue dentée de distribution (21) couplée via la chaîne de distribution (18) ou la courroie de distribution avec une roue intermédiaire (20) d'un entraînement de distribution (19) dont le diamètre correspond au double du diamètre de la roue dentée de distribution (21).

5. Groupe électrogène selon l'une des revendications précédentes,
**caractérisé en ce**
**qu'**un seul générateur (11) est prévu.

6. Véhicule, en particulier véhicule hybride, avec un groupe électrogène selon l'une des revendications précédentes.
